# FASCICULE DE BREVET EUROPEEN

(11) **EP 2 088 025 B1**
(45) Date de publication et mention de la délivrance du brevet: **04.04.2018**
(21) Numéro de dépôt: 09152157.5
(22) Date de dépôt: 05.02.2009
(51) Int. Cl.: B60L 5/42, B60M 1/36, B60M 3/04

(54) **Circuit d'alimentation électrique par le sol notamment pour tramway**
Bodengeführter Stromversorgungskreislauf für eine Straßenbahn
Ground electricity supply circuit, in particular for a tram

(30) Priorité: 06.02.2008 FR 0850750
(43) Date de publication de la demande: 12.08.2009
(73) Titulaire: ALSTOM Transport Technologies, 93400 Saint-Ouen (FR)
(72) Inventeur: Vienney, Jean-Pierre, 75009, PARIS (FR)
(74) Mandataire: Lavoix

(56) Documents cités:
- WO-A-02/096737
- WO-A1-2007/056804
- DE-A1- 4 329 935
- DE-C- 301 503
- JP-A- 2002 165 301
- US-A- 4 139 071

## Description

L'invention se rapporte à un circuit d'alimentation électrique par le sol destiné à un réseau de transport notamment de type tramway.

Il existe des circuits d'alimentation par le sol permettant à des véhicules de type tramway de capter au moyen d'un patin frotteur, l'énergie électrique de traction nécessaire à leur mise en mouvement et de s'affranchir de lignes aériennes peu esthétiques, en particulier au niveau des carrefours.

Un tel circuit est décrit dans la demande de brevet EP 1 043 186 A1. Le circuit décrit consiste pour chaque voie de circulation en un assemblage d'alimentation qui comprend une série de segments ou tronçons de piste conducteurs et de contact, isolés entre eux par des joints isolants et au moins partiellement découverts. L'assemblage d'alimentation comprend également une ligne électrique destinée à être alimentée en permanence, des moyens aptes à relier sélectivement les segments de pistes à la ligne électrique ainsi que des segments - supports en matériau isolant présentant chacun la forme générale d'un profilé en « l ».

En outre, l'âme des segments - supports est percée de passages intérieurs permettant le cheminement de la ligne électrique qui se présente sous la forme de câbles soumis par exemple à des tensions de 750 volt et 0 V, et l'alimentation de la piste d'alimentation formée par la succession de segments conducteurs séparés par des joints isolants.

Des boîtiers de commutation vers lesquels cheminent les câbles 750 volts et 0 Volt sont disposés entre deux segments de piste conducteurs et permettent sélectivement la connexion avec la ligne d'alimentation 750 Volt ou la ligne de mise à 0V.

Une configuration identique est mise en oeuvre sur la voie de circulation adjacente décrite ci-dessus en faisant cheminer une deuxième ligne 750 volts et une deuxième ligne mise à 0 volt le long et à l'intérieur de la série de segments - support de la piste d'alimentation de la voie adjacente.

Une telle architecture entraîne une résistance d'alimentation élevée qui est réduite par la mise en équipotentiel des lignes de 750 volts des deux pistes adjacentes.

Il en résulte l'installation de regards et de fourreaux spécifiques à la mise en équipotentiel des deux pistes d'alimentation.

US 4139071 divulgue un système d'alimentation par le sol comportant deux voies de circulation, chacune équipée d'au moins une piste constituée d'une pluralité de segments. Deux segments successifs sont isolés l'un de l'autre. Un câblage électrique commun à plusieurs segments achemine une puissance électrique délivrée par un transformateur primaire vers une pluralité de transformateurs secondaires. Un transformateur secondaire alimente chacun des segments d'une paire de segments parallèles par l'intermédiaire d'un circuit et d'une boite de jonction.

WO 2007/056804 divulgue un système d'alimentation par le sol comportant deux pistes d'alimentation disposées parallèlement l'une de l'autre, chaque piste équipant l'une des voies de circulation d'une route. Chaque piste est constituée d'une pluralité de segments, deux segments successifs étant isolés l'un de l'autre par une portion isolante de la route. Les segments des pistes sont alimentés par des lignes d'alimentation haute tension AC circulant le long de la route et des équipements transformateur-redresseur transformant la courant AC en courant DC. Un équipement est implanté au droit du milieu de chaque paire de segments parallèles. Un équipement comporte des interrupteurs adaptés pour que les deux segments d'une même paire de segments parallèles puissent être alimentés indépendamment l'un de l'autre.

Le problème technique est de pouvoir s'affranchir de l'installation de regards et de fourreaux spécifiques à la mise en équipotentiel d'alimentation.

A cette fin, l'invention a pour objet un circuit d'alimentation électrique conforme aux revendications.

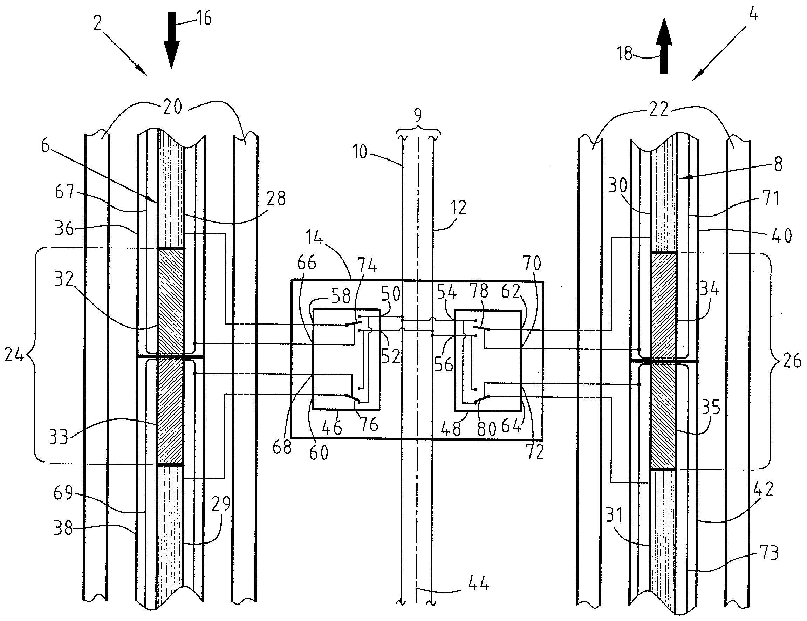

L'invention sera mieux comprise à la lecture de la description d'une forme de réalisation qui va suivre, donnée uniquement à titre d'exemple et faite en se référant aux dessins sur lesquels la Figure unique est une vue de dessus d'un circuit d'alimentation électrique par le sol de deux voies de circulation en sens inverses l'une de l'autre.

D'après la Figure, un circuit d'alimentation électrique par le sol notamment pour tramway comprend deux voies 2, 4 de circulation de véhicule, chacune équipée d'une piste d'alimentation 6, 8.

Le circuit d'alimentation comprend également, d'une part, une ligne électrique d'alimentation 9 commune aux deux pistes 6, 8 constituée d'un câble d'alimentation 10 et d'un câble de retour de courant 12 et, d'autre part, des ensembles de connexion 14 permettant de connecter n'importe laquelle des pistes 6, 8 aux câbles électriques 10, 12 dont un seul ensemble de connexion est représenté sur la figure.

Les deux voies de circulation 2, 4 de type tramway, ici dans une forme de trajet partiel rectiligne sont disposées au sol parallèlement l'une à l'autre, chacune ayant des sens de circulation mutuellement inverses, représentés respectivement par les flèches 16, 18.

Chaque voie de circulation 2, 4 comprend une paire de rails de roulement parallèles 20, 22 et, disposée entre les deux rails 20, 22 de chaque paire, la piste d'alimentation électrique 6, 8 par le sol associée. Chaque piste 6, 8 inclut une succession de segments de piste d'alimentation électriquement conducteurs séparés par des joints isolants.

Sur la figure, chaque piste 6, 8 comprend localement respectivement un joint isolant 24, 26, représenté par des hachures en biais, entouré de part et d'autre par un premier et un second segments de piste conducteurs 28, 29 ; 30, 31 représentés par des hachures verticales.

Chaque joint isolant 24, 26 comprend respectivement des premier et second éléments de piste isolants 32, 33 ; 34, 35.

Chaque segment de piste conducteur 28, 29 ; 30, 31 comprend un ou plusieurs éléments de piste conducteurs successifs reliés électriquement. Ici sur la figure, un seul élément de piste conducteur est représenté par segment de piste conducteur.

Chaque segment de piste conducteur 28, 29 ; 30, 31 repose intégralement en longueur sur un support respectif 36, 38; 40, 42 en matériau isolant et présentant la forme générale d'un profilé en « l ».

Pour chaque voie, chaque élément de piste isolant 32, 33 ; 34, 36 respectivement adjacent au premier segment conducteur 28, 30 et au deuxième segment conducteur 29, 31 repose sur les supports 36, 38; 40, 42 associés respectivement aux segments conducteurs 28, 29 ; 30, 31.

La ligne électrique d'alimentation 9 est disposée parallèlement entre les deux voies de circulation 2 et 4 selon un axe médian X-X séparant les deux voies 2 et 4.

Les câbles électriques 10, 12 sont raccordés chacun à chaque segment conducteur des deux pistes d'alimentation 6, 8 au travers des ensembles de connexion 14 disposés centralement selon l'axe X-X au niveau d'un joint isolant sur deux. Sur la figure, un seul ensemble de connexion 14 est représenté au niveau des deux joints isolants 24, 26.

Les ensembles de connexion 14 sont disposés à l'intérieur de regards centraux selon l'axe X-X non représentés disposés au dessus des câbles électriques 10 et 12.

Les deux câbles électriques 10, 12 sont raccordés aux deux bornes d'une source de tension non représentée, le câble d'alimentation 10 et le câble de retour de courant 12 étant mis respectivement à une tension de 750 volts et 0 volt.

Les câbles électriques 10, 12 se présentent sous la forme de câbles électriques classiquement connus dans le transport et la distribution d'énergie électrique. Les câbles sont pourvus chacun d'un fourreau et présentent une section correspondant à un courant de charge appelé nécessaire qui peut varier entre 70 à 500 mm².

L'ensemble de connexion 14 comprend deux modules de commutation 46, 48, associés respectivement aux deux pistes d'alimentation 6, 8.

Chaque module de commutation 46, 48 est raccordé au câble d'alimentation 10 et au câble de retour de courant 12 respectivement en deux entrées de lignes 50, 52 ; 54, 56.

Chaque module de commutation 46, 48 comprend respectivement deux sorties de piste 58, 60 ; 62, 64, une première 58, 62 étant raccordée respectivement au premier segment de piste conducteur 28, 30, adjacent au joint 24, 26 associé et une deuxième 60, 64 étant raccordée respectivement au deuxième segment conducteur 29, 31, adjacent au joint 24, 26 associé.

Chaque module de commutation 46, 48 comprend respectivement deux entrées de commande de commutation 66, 68 ; 70, 72, une première entrée de commande 66, 70 étant raccordée respectivement en une borne d'une première boucle de détection magnétique 67, 71 associée au premier segment de piste conducteur 28, 30 et une deuxième entrée de commande 68, 72 étant raccordée respectivement en une borne d'une deuxième boucle de détection 69, 73 magnétique associée au deuxième segment de piste conducteur 29, 31.

Chaque module de commutation 46, 48 comprend deux commutateurs 74, 76 ; 78, 80. Un premier commutateur 74, 78 est apte à raccorder la première sortie de piste 58, 62 à la première entrée de ligne 50, 54 ou la deuxième entrée de ligne 52, 56 sélectivement en fonction de la commande fournie à la première entrée de commande 66, 70. Un deuxième commutateur 76, 80 est apte à raccorder la deuxième sortie de piste 60, 64 à la première entrée de ligne 50, 54 ou la deuxième entrée de ligne 52, 56 sélectivement en fonction de la commande fournie à la deuxième entrée de commande 68, 72.

En fonctionnement, lorsqu'un véhicule de type tramway se déplace dans le sens de marche 16 le long de la voie de circulation 20 et vient se trouver en entrée au-dessus du segment de piste conducteur 29, la boucle de détection magnétique correspondante 69 située en dessous du véhicule détecte la présence de celui-ci et envoie un signal de commande au commutateur 76 d'alimentation du segment de piste conducteur 29.

Le commutateur 76 ayant reçu l'ordre d'alimenter le segment de piste 29 connecte la sortie d'alimentation 60 depuis l'entrée 52 raccordée au câble de retour de courant 12 à l'entrée 50 raccordée au câble d'alimentation 10.

Ainsi, le segment de piste conducteur 29 est alimenté en courant sur 750 volts.

En même temps ou postérieurement, la boucle de détection magnétique 67 détecte la sortie du véhicule du segment de piste 28 et commande au commutateur 74 de couper l'alimentation du segment de piste 28 en faisant commuter sa sortie 58 de l'entrée 50 sous 750 volts à l'entrée 52 sous 0 volt.

L'unicité de la ligne électrique 9 commune aux deux pistes d'alimentation 6, 8 permet d'appliquer une même tension aux deux pistes d'alimentation à un même niveau géographique et de s'affranchir de la mise en équipotentiel de lignes d'alimentation séparées qui alimenteraient chacune une piste en étant raccordé à une même source d'alimentation.

La fourniture d'une ligne électrique d'alimentation et d'une ligne électrique de retour de courant commune aux deux voies de circulation permet donc de s'affranchir de la fourniture de regards et de fourreaux spécifiques à la mise en équipotentiel d'au moins deux lignes d'alimentation.

En outre, la disposition d'une ligne électrique d'alimentation à l'extérieur de la piste, en particulier des segments - supports permet une mise en place facile de câbles d'alimentation logés dans des fourreaux de grande taille entre les deux voies adjacentes.

La disposition externe des câbles d'alimentation et de retour de courant permet également un accès plus facile pour la maintenance des équipements.

En variante, chaque module de commutation comprend un seul commutateur.

Dans ce cas, un commutateur simple à deux entrées-une sortie est placé au niveau de chaque joint d'une piste en étant raccordé respectivement à un segment de piste.

Ainsi, chaque segment de piste conducteur est alimenté sélectivement.

En variante, chaque ensemble de connexion comprend un seul module de commutation, et chaque module de commutation comprend deux commutateurs. Dans ce cas, chaque module de commutation raccordé à une même piste est placé au niveau d'un joint sur deux le long d'une même piste, les deux commutateurs formant le module de commutation étant raccordés respectivement aux deux segments de piste conducteurs adjacents au joint au niveau duquel est placé le module de commutation.

Ainsi, les ensembles de connexion peuvent être alternativement raccordés le long de la ligne électrique d'alimentation à l'une des deux pistes d'alimentation.

Ainsi, chaque segment conducteur de la piste est alimenté sélectivement et le nombre de poses d'ensembles de connexion est réduit par rapport au nombre de poses nécessaires lorsqu'un module de commutation ayant un commutateur simple est placé au niveau de chaque joint.

## Revendications

1. Circuit d'alimentation électrique par le sol destiné à un véhicule de transport notamment de type tramway, comprenant
- deux voies de circulation (2, 4) de véhicule mutuellement parallèles, chacune ayant une piste d'alimentation (6, 8) incluant une succession de segments de pistes conducteurs (28, 29 ; 30, 31) séparés par des joints isolants (24, 26);
- une ligne électrique d'alimentation (9) raccordable à des bornes d'une source d'alimentation,
la ligne d'alimentation (9) étant commune aux deux pistes d'alimentation (6, 8), et le circuit comportant des moyens de commutation (46, 48) pour le raccordement indépendant et de manière sélective des segments des pistes d'alimentation (6, 8) à la ligne d'alimentation commune (9),
**caractérisé en ce que** les moyens de commutation (46, 48) comprennent un ensemble de modules de commutation (46), les modules de commutation (46) comprenant deux commutateurs (74, 76) à deux entrées - une sortie et étant placés seulement au niveau d'un joint isolant (24) sur deux le long d'une piste et chaque module de commutation (46) étant raccordé aux deux segments conducteurs (28, 29) de la même piste d'alimentation adjacents au joint isolant (24) au niveau duquel le module de commutation (46) est placé.

2. Circuit d'alimentation selon la revendication 1, **caractérisé en ce que** la ligne d'alimentation commune (10, 12) est disposée entre les deux pistes d'alimentation (6, 8).

3. Circuit d'alimentation électrique selon l'une quelconque des revendications 1 à 2, **caractérisé en ce que** la ligne d'alimentation commune (9) comprend un câble d'alimentation (10) et un câble de retour de courant (12).

4. Circuit d'alimentation électrique selon la revendication 3, **caractérisé en ce que** le câble d'alimentation (10) et le câble de retour de courant (12) comprennent chacun des câbles électriques enrobés dans un fourreau.

5. Circuit d'alimentation électrique selon l'une quelconque de revendications 1 à 4, **caractérisé en ce que** les moyens de commutation (46, 48) comprennent un ensemble de commutateurs simples (74) à deux entrées et une sortie, un commutateur étant placé respectivement au niveau de chaque joint isolant (24, 26) d'une piste et raccordé respectivement à un segment conducteur de la piste.

6. Circuit d'alimentation électrique selon la revendication 5, **caractérisé en ce que** les joints isolants (24, 26) des deux pistes (6, 8) sont placés à des mêmes niveaux le long de la ligne d'alimentation (9) et les commutateurs simples (74) placés à un même niveau sont intégrés dans un ensemble de connexion (14).

7. Circuit d'alimentation électrique selon la revendication 1, **caractérisé en ce que** les joints isolants (24, 26) des deux pistes (6, 8) sont placés à des mêmes niveaux le long de la ligne d'alimentation (9) et les modules de commutations (46, 48) placés à un même niveau sont intégrés dans un ensemble de connexion (14).

8. Circuit d'alimentation électrique selon l'une quelconque des revendications 1 à 7, **caractérisé en ce qu'**il comprend une source d'alimentation raccordée en permanence à la ligne d'alimentation (9).

## Patentansprüche

1. Elektrischer Bodenversorgungskreis, der für ein Transportfahrzeug, insbesondere für eine Straßenbahn vorgesehen ist, umfassend
- zwei Fahrzeugverkehrswege (2, 4), die zueinander parallel sind und jeweils eine Versorgungsspur (6, 8) aufweisen, die eine Folge von leitenden Spursegmenten (28, 29; 30, 31) einschließt, die durch isolierende Dichtungen (24, 26) getrennt sind;
- eine elektrische Versorgungsleitung (9), die an Anschlüsse einer Versorgungsquelle anschließbar ist,
wobei die Versorgungsleitung (9) den zwei Versorgungsspuren (6, 8) gemeinsam ist und der Kreis Mittel (46, 48) zum Schalten für die unabhängige und selektive Verbindung der Segmente der Versorgungsspuren (6, 8) an die gemeinsame Versorgungsleitung (9) aufweist,
**dadurch gekennzeichnet, dass** die Mittel (46, 48) zum Schalten einer Anordnung von Schaltmodulen (46) umfassen, wobei die Schaltmodule (46) zwei Schalter (74, 76) mit zwei Eingängen und einem Ausgang umfassen und nur an einer von zwei isolierenden Dichtungen (24) entlang einer Spur angeordnet sind und jedes Schaltmodul (46) an zwei leitenden Segmenten (28, 29) derselben Versorgungsspur benachbart zur isolierenden Dichtung (24), an der das Schaltmodul (46) angeordnet ist, angeschlossen ist.

2. Versorgungskreis nach Anspruch 1, **dadurch gekennzeichnet, dass** die gemeinsame Versorgungsleitung (10, 12) zwischen den zwei Versorgungsspuren (6, 8) angeordnet sind.

3. Elektrischer Versorgungskreis nach einem beliebigen der Ansprüche 1 bis 2, **dadurch gekennzeichnet, dass** die gemeinsame Versorgungsleitung (9) ein Versorgungskabel (10) und ein Kabel (12) zur Rückführung des Stroms umfasst.

4. Elektrischer Versorgungskreis nach Anspruch 3, **dadurch gekennzeichnet, dass** das Versorgungskabel (10) und das Kabel (12) zum Rückführen des Stroms jeweils elektrische Leitungen, die von einem Mantel umhüllt sind, aufweisen.

5. Elektrischer Versorgungskreis nach einem beliebigen der Ansprüche 1 bis 4, **dadurch gekennzeichnet, dass** die Mittel (46, 48) zum Schalten eine Anordnung von einfachen Schaltern (74) mit zwei Eingängen und einem Ausgang umfassen, wobei ein Schalter jeweils an jeder isolierenden Dichtung (24, 26) einer Spur angeordnet ist und jeweils mit einem leitenden Segment der Spur verbunden ist.

6. Elektrischer Versorgungskreis nach Anspruch 5, **dadurch gekennzeichnet, dass** die isolierenden Dichtungen (24, 26) der zwei Spuren (6, 8) an gleichen Niveaus entlang der Versorgungsleitung (9) angeordnet sind und die einfachen Schalter (74), die an einem selben Niveau angeordnet sind, in einer Verbindungseinrichtung (14) integriert sind.

7. Elektrischer Versorgungskreis nach Anspruch 1, **dadurch gekennzeichnet, dass** die isolierenden Dichtungen (24, 26) der zwei Spuren (6, 8) an selben Niveaus entlang der Versorgungsleitung (9) angeordnet sind und die Schaltmodule (46, 48), die an einem selben Niveau angeordnet sind, in einer Verbindungseinrichtung (14) integriert sind.

8. Elektrischer Versorgungskreis nach einem beliebigen der Ansprüche 1 bis 7, **dadurch gekennzeichnet, dass** er eine Versorgungsquelle aufweist, die ständig mit der Versorgungsleitung (9) verbunden ist.

## Claims

1. Ground-level power supply circuit for a transport vehicle, especially of the tramway type, comprising
- two mutually parallel vehicle running ways (2, 4), each having a power supply track (6,8), which includes a series of conducting track segments (28, 29 ; 30, 31) separated by insulated joints (24, 26);
- a power supply line (9), which can be connected to terminals of a power supply source,
the power supply line (9) being common to the two power supply tracks (6, 8) and the circuit comprising switching means (46, 48) for independently and selectively connecting the power supply track segments (6, 8) to the common power supply line (9),
**characterised in that** the switching means (46 ; 48) comprise an assembly of switching modules (46), the switching modules (46) comprising two two input-one output switches (74, 76) and being located only at the level of one insulated joint (24) out of two along a track, and each switching module (46) being connected to the two conducting segments (28, 29) of the same supply track that are adjacent to the insulated joint (24) at the level of which the switching module (46) is located.

2. Supply circuit according to claim 1, **characterised in that** the common power supply line (10 ,12) is arranged between the two power supply tracks (6, 8).

3. Power supply circuit according to any one of claims 1 to 2, **characterised in that** the common power supply line (9) comprises a power supply cable (10) and a current return cable (12).

4. Power supply circuit according to claim 3, **characterised in that** the power supply cable (10) and the current return cable (12) each comprise electric cables encased in a sleeve.

5. Power supply circuit according to any of claims 1 to 4, **characterised in that** the switching means (46, 48) comprise an assembly of simple switches (74) having two inputs and one output, one switch being located at the level of each insulated joint (24, 26) of a track and being connected to a conducting segment of the track.

6. Power supply circuit according to claim 5, **characterised in that** the insulated joints (24, 26) of the two tracks (6, 8) are located at the same level along the power supply line (9), and the simple switches (74) located at the same level are integrated into a connection assembly (14).

7. Power supply circuit according to claim 1, wherein the insulated joints (24, 26) of the two tracks (6,8) are located at the same level along the power supply line (9), and the switching modules (46, 48) located at the same level are integrated into a connection assembly (14).

8. Power supply circuit according to any of claims 1 to 7, **characterised in that** it comprises a power supply source which is permanently connected to the power supply line (9).
